# EUROPEAN PATENT APPLICATION

(11) **EP 4 750 112 A1**
(43) Date of publication of application: **27.05.2026**
(21) Application number: 24306940.8
(22) Date of filing: 20.11.2024
(51) Int. Cl.: H04W 12/041, H04W 12/108, H04W 12/42, H04L 9/32

(54) **METHOD FOR REGISTERING A MOBILE DEVICE, AN EMBEDDED UNIVERSAL INTEGRATED CIRCUIT CARD, EUICC, AND A MOBILE NETWORK SERVER**

(71) Applicant: NXP B.V., 5656 AG Eindhoven (NL)
(72) Inventor: Sinnhofer, Andreas Daniel, 5656 AG Eindhoven (NL); Orthacker, Clemens, 5656 AG Eindhoven (NL); Caillaud, Cyril Harold, 5656 AG Eindhoven (NL); Yang, Jitang, 5656 AG Eindhoven (NL); Nitsch, Nils Frederik, 5656 AG Eindhoven (NL); Deliana, Hartini, 5656 AG Eindhoven (NL); Raffo, Didimo Jose Junior, 5656 AG Eindhoven (NL)
(74) Representative: Krott, Michel

(57) **Abstract**

There is disclosed a method for registering a mobile device comprising an embedded Universal Integrated Circuit Card, eUICC, at a mobile network server. The method comprises determining subscriber identification information and deriving a first key. Then a registration request is sent to the mobile network server. The eUICC signs first random data with the first key and sends it to the mobile network server. The server produces a server authentication key and authenticates the eUICC, and if successful, grants limited access. The eUICC signs first or second random data with a second key and sends a registration message comprising the signed first or second random data to the mobile network server, which determines the validity of the signed first or second random data, and if valid, grants regular access to the eUICC. Further an embedded Universal Integrated Circuit Card, a mobile network server and a computer program product is disclosed.

## Description

### TECHNICAL FIELD

The present disclosure relates to a method for registering a mobile device comprising an embedded Universal Integrated Circuit Card, eUICC, at a mobile network server, the method comprises determining subscriber identification information and deriving a first key. Then a registration request is sent to the mobile network server. The eUICC signs first random data with the first key and sends it to the mobile network server upon instigation by the mobile device. The server produces a server authentication key and authenticates the eUICC, and if successful, grants limited access. The eUICC signs first or second random data with a second key and sends a registration message comprising the signed first or second random data to the mobile network server, which determines the validity of the signed first or second random data, and if valid, grants regular access to the eUICC. The disclosure further relates to an embedded Universal Integrated Circuit Card, eUICC, a mobile network server, and a computer program product.

The disclosure may hence relate to the technical field of mobile communications, in particular with respect to embedded Subscriber Identity Module, eSIM, which consists of software installed onto an eUICC chip of a device.

### TECHNICAL BACKGROUND

Cards with embedded Subscriber Identity Modules, eSIM, have been introduced by way of the GSMA standard. They replaced physical SIM cards, which have been in use since 1991. eSIM technology has transformed the classic plastic SIM card into an electronic dataset, called profile. In order to successfully connect with the mobile network operator, MNO, a profile requires the use of subscriber identification information, like an international mobile subscriber identity, IMSI.

Instead of sending a physical, i.e. plastic, SIM card to a subscriber, eSIM allows the mobile network operator, MNO, to easily download and install such a profile into an embedded secure element, e.g. an embedded Universal Integrated Circuit Card, eUICC, in a connected device (e.g. a mobile phone, tablet, laptop computer, or a wearable, like a smart watch, a smart ring or other smart jewelry, fitness tracker, smart glasses, augmented or virtual reality headsets or even speakers and headphones). Mobile devices with eSIM functionality are made available to a subscriber (i.e. a user) without a profile.

Therefore, they require some sort of connectivity to acquire a profile from the MNO, the user is subscribing to.

One possible technique to connect an eUICC embedded mobile device with the MNO and download the first user subscription is to connect via an existing fixed network connection, for example a wireless network, i.e. Wi-Fi.

One other possible technique to enable mobile devices to connect to the MNO and download the profile, is to supply the mobile device with a so-called bootstrap provisioning profile. Bootstrap profiles are pre-loaded onto eUICCs either by the eUICC manufacturer, EUM, or the original equipment manufacturer, OEM, before issuing the device to the end customer by delivering the devices to shops or the subscribers directly.

A bootstrap profile provides basic connectivity to enable the subscriber or end-user to download a profile that corresponds to the subscription with the MNO directly upon device activation without the need for a different connectivity (e.g. Wi-Fi). However, a bootstrap profile also needs to have an international mobile subscriber identity, IMSI, to make the basic connection.

A bootstrap profile is usually only used seldom, maybe once or twice, and only for downloading another profile. An IMSI, which serves as identifier of a profile, is allocated to a bootstrap profile nevertheless and requires to be managed in the MNOs backend. The corresponding consumption of IMSIs is substantial and leaves millions of subscriptions that correspond to the IMSIs unused most of the time.

One method of avoiding this is to use the same IMSIs on multiple devices by assigning IMSI ranges to each of the devices' eUICC and upon activation an eUICC randomly chooses an IMSI from that range. By using IMSI ranges, collisions might occur when two eUICCs randomly pick the same IMSI at the same time. To the MNO backend two identical IMSIs used at the same time can also mean the presence of a cloned device. Therefore, the MNO backend raises an alarm in this case and bans the IMSI from the network to prohibit illegal access by a clone.

### SUMMARY OF THE DISCLOSURE

There may be a need to provide improved registration of mobile devices at a mobile network server. A method for registering a mobile device, an embedded Universal Integrated Circuit Card, a mobile network server, and a computer program product is provided.

In the present context, the terms "embedded Universal Integrated Circuit Card" and "eUICC" may in particular refer to hardware or software components that serve to produce the effects described herein. These hardware or software components may in particular be embodied in a stand-alone fashion, in that the hardware components are formed as a closed component interacting with the other parts of the device or in that the software components can be executed on their own. However, these hardware or software components may also be embodied in a linked or even joined fashion, in that the hardware components are formed as part of another component. In this case, the hardware components may be embodied as a so-called "integrated Universal Integrated Circuit Card" or "iUICC". The software components may be embodied as part of a larger program, and constitute a module, subroutine or function of this larger program.

In the present context, the term "mobile network server" may refer to a plurality of devices. The network server function can in this case be executed by more than one server device, which may be a combination of physical and virtual servers, which can be hosted at the same location or distant from each other. There might for example be a first server, the HLR, which may be responsible for authentication and granting network access. There may then also be one or more second servers, so-called "OTA servers", using defined protocols (SMS, OTA, HTTP, etc.) to communicate with the eUICC once logged onto the network. OTA stands for over-the-air. Authentication based on the subscriber identification information, like a randomly picked IMSI, would be handled by HLR servers, which may also be indicating that the device has "limited access" to the network. Signed random values would be handled by OTA servers, which - if the signed values are determined to be valid - may indicate that the device has "full access" to the network.

In the present context, the term "key" may refer to a cryptographic key, which may be a symmetric key, which means that both parties of a communication are in possession of the same identical key, which may be provided from either party to the other party by a different type of communication. This different type of communication may also be offline, that is transmitted in physical form, e.g. on a data storage device, like a USB stick, a hard drive, an SSD drive or a disc, like a CD ROM. A key may also be one part of an asymmetric key, where a party can generate a private key and a public key. A private key may also be called secret key. The private key or secret key must not be shared, while the public key can freely be distributed without the necessity for extra precautions. A message to the party can be encrypted with the public key, and only be decrypted with the private key. On the other hand, a message can be signed with the private key, and this signature can be verified or validated with the public key. A key may further be embodied as certificate. A certificate contains a public key and may contain additional information such as issuing organization, purpose and other types of metadata. A certificate may itself be signed by a certificate authority (CA) using CA's private key. This verifies the authenticity of the certificate. In that sense, in the present disclosure a key can be embodied as a certificate.

According to an aspect of the present disclosure, it is described a method for registering a mobile device comprising an embedded Universal Integrated Circuit Card, eUICC, at a mobile network server, the method comprising:
determining, by the eUICC, a subscriber identification information;
deriving, by the eUICC, a first key from a master secret key by using a key derivation function and the subscriber identification information;
sending, by the eUICC, a registration request to the mobile network server, wherein the registration request comprises the subscriber identification information;
signing, by the eUICC, first random data with the first key;
sending, by the eUICC upon instigation by the mobile device, the signed first random data to the mobile network server;
producing, by the mobile network server, a server authentication key with an authentication key producing function;
authenticating, by the mobile network server, the eUICC on the basis of the subscriber identification information, the signed first random data, and the server authentication key;
upon successful authenticating, granting, by the mobile network server, limited access to the eUICC; signing, by the eUICC, the first random data or second random data with a second key, that is stored on the eUICC;
sending, by the eUICC, a registration message comprising the signed first or second random data to the mobile network server;
determining, by the mobile network server, whether the signed first or second random data comprised in the registration message is valid at least on the basis of a validation key and one of the subscriber identification information, the registration message; and
upon determining that the signed first or second random data comprised in the registration message is valid, granting, by the mobile network server, regular access to the eUICC.

According to a further aspect of the present disclosure, it is described an embedded Universal Integrated Circuit Card, eUICC, at least having stored thereon:
an id function for determining a subscriber identification information;
a master secret key;
a second key; and
a key derivation function;
wherein, upon activation, the eUICC is configured to:
   determine the subscriber identification information by executing the id function;
   derive a first key from the master secret key by using the key derivation function and the subscriber identification information;
   sign first random data with the first key;
   send the signed first random data to the mobile network server upon instigation by the mobile device;
   sign the first random data or second random data with the second key; and
   send a registration message comprising the signed first or second random data to the mobile network server.

According to a further aspect of the present disclosure, it is described a mobile network server, at least having stored thereon:
a plurality of subscriber identification information; and
an authentication key producing function;
wherein the mobile network server is configured to:
   receive a registration request to register an eUICC of a mobile device, wherein the request comprises subscriber identification information;
   receive, from the eUICC, signed first random data;
   produce a server authentication key with the authentication key producing function;
   authenticate the eUICC on the basis of the subscriber identification information, the signed first random data, and the server authentication key;
   grant, upon successful authentication, limited access to the eUICC;
   receive a registration message comprising the signed first random data or signed second random data from the eUICC;
   determine whether the signed first or second random data comprised in the registration message is valid at least on the basis of one of the subscriber identification information, the registration message, and a validation key; and
   grant, upon determination that the signed first or second random data comprised in the registration message is valid, regular access to the eUICC.

In the present context, the term "basic connectivity" or "limited connectivity" or "basic/limited access" may in particular refer to a connection of a mobile device with a mobile network server that does not allow access to other devices or networks, like the internet, beyond the mobile network server. This type of connection can be used by the mobile device to communicate with the mobile network server only.

In the present context, the term "regular access" or "full connectivity" may in particular refer to a type of connection, that allows the mobile device to access devices or networks beyond the mobile network server, in accordance with a corresponding contract or subscription.

In the present context, the term "subscriber identification information" may in particular refer to an information which should be unique and may serve to identify a subscriber. There are many possible implementations, like IMSI (International mobile subscriber identity), ICCID (integrated circuit card identification number), IMPI (IMS (IP multimedia subsystem) private user identity), EUIMID (expanded UIMID (user identity module identifier)), RUIMID (Removable UIMID), etc. Also, a CDMA (code-division multiple access) application on SIM card can be used. Unique identifiers therefor are known as IMSI_M (IMSI - Mobile) or MIN (Mobile Identification Number) in conjunction with ESN (Electronic Serial Number) or MEID (Mobile Equipment Identifier). In the following, if one of the above is used to describe features of the disclosure, each one of the above can be used instead.

According to an exemplary embodiment, the invention may be based on the idea that the MNO can request the eUICC(s) for an additional registration or at least receive additional registration to verify authenticity and allow eUICCs that might be clones in certain cases. Usually, MNOs do not allow the same subscriber identification information to be registered twice and treat such eUICCs as unwanted clones, maybe even consider them hacked and initiate appropriate counter measures.

For some scenarios, usage of the same subscriber identification information in different devices/eUICCs may however be desired, e.g. to re-use subscriber identification information for bootstrap purposes, where the subscription is only used for a short period of time. But the MNO may not be able to detect easily whether two devices/eUICCs using the same subscriber identification information are wanted or unwanted clones without any further steps.

The disclosure may provide a procedure where the MNO can request the eUICC to perform a second registration before full network access, i.e. regular access, is granted to the device/eUICC. Only after this second layer of security check, the MNO may then grant full connectivity and thus regular access to the subscribed services, i.e. internet access, voice call, SMS etc. to the device/eUICC.

This mechanism may limit abuse of the otherwise high attack surface on the eUICC due to master secrets being stored in an applet/eUICC and/or due to necessary a key transfer between EUM and MNO.

The devices and methods described in this disclosure may help to distinguish unwanted (e.g. hacked) clones from eUICCs which are sharing subscriber identification information, like IMSI ranges, as intended. The disclosed techniques also may support fraud protection mechanisms which are employed by MNOs for clone detection.

In summary, this disclosure may enable MNOs to effectively protect against cracking one single eUICC and the associated common network credentials and then re-producing them on large scale by non-authorized entities. This may be achieved by an additional registration, i.e. a second level chip individual authentication.

The aspects defined above, and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

### EXEMPLARY EMBODIMENTS

According to an embodiment, the second key may be an eUICC private key of an eUICC key pair. The validation key may then be an eUICC public key of the eUICC key pair. The eUICC public key is then signed with an eUICC manufacturer, EUM, private key, and the registration message comprises the eUICC public key. By using such an asymmetric cryptographic technique, no additional prior communication is necessary, beyond the general making available of the EUM public key to the mobile network server, which can be used to validate the signature of the eUICC public key, which in turn may be used to validate the registration message.

According to an embodiment, the second key is the validation key. This key is then a symmetric key, which either was received by the manufacturer of the eUICC, EUM, from the mobile network operator, MNO, who operates the mobile network server, or alternatively the key was received by the mobile network operator, MNO, from the eUICC manufacturer, EUM. In any case, whether the EUM or the MNO first had the key, maybe even generated the key, the transmission of the symmetric key was performed ahead of time. Since the EUM thus was in possession of this key, it could store it on the eUICC(s). The symmetric key may then also be used to validate the registration message. The transmission of the symmetric key may thereby be performed in a secure manner over a communication path that is different than the device. The communication path for transmitting the symmetric key may also be offline, i.e. transmission may be in physical form, e.g. on a data storage device, like a USB stick, a hard drive, an SSD drive or a disc, like a CD ROM.

According to an embodiment, the method may further comprise upon determining, by the mobile network server, that the first or second signed random data of the eUICC is not valid, blocking access to the mobile network server for the mobile device. Thereby the mobile network server may increase security, by blocking those devices that fail to successfully register.

According to an embodiment, the method may further comprise receiving a request to sign random data. The request may be sent from the mobile network server to the eUICC. There may be a first request to sign random data in response to sending the registration request. The request to sign from the mobile network server may comprise the first random data, which then is signed by the eUICC.

There may also be a second request to sign random data after successfully authenticating the eUICC at the mobile network server. The second request is also sent to the eUICC from the mobile network server and may also comprise the random data to be signed by the eUICC. The second request may comprise the first random data, possibly again, or provide new, second random data to be signed. It may also comprise an indication that the first random data from the authentication steps it to be reused, so that it doesn't have to be included again, thereby saving bandwidth. The first and second requests to sign may in particular be useful, if the mobile network server determines that the subscriber identification information of the eUICC was previously used for mobile device registration. Thereby the mobile network server can increase overall speed of registration, since only those eUICCs are requested to authenticate, that are determined to use a subscriber identification information, like an IMSI, that was already previously used for registration.

According to an embodiment, the communication between the eUICC and the mobile network server may be performed via at least one of an over-the-air server, a toolkit framework, a short message service, SMS, message, as Unstructured Supplementary Service Data, USSD, a hypertext transfer protocol pull session, a Signaling System No. 7 message. Since the mobile network server is connected to the mobile device with basic connectivity during the registration any of the communication techniques can be used to transmit the request to sign. This communication may comprise sending the registration message and the request to sign random data, which may be pushed from the mobile network server to the eUICC.

According to an embodiment, the eUICC is further configured to receive a request to sign first or second random data from the mobile network server. The request may comprise the random data to be signed. Thereby the overall speed of registration can be increased, since only those eUICCs are requested to authenticate, that are determined to use a subscriber identification information that was already previously used for registration.

According to an embodiment the mobile network server further may have stored thereon a list of keys, wherein each key of the list of keys is associated with one of the plurality of subscriber identification information, and wherein the authentication key producing function retrieves the sever authentication key that is associated with the subscriber identification information, which is comprised in the registration request. Thereby, the processing load on the mobile network server can be reduced, since the list of keys have been generated before and transmitted to the mobile network server in a secure manner.

According to an embodiment the mobile network server further may have stored thereon a master secret key and a key derivation function, and wherein the authentication key producing function derives the server authentication key from the master secret key by using the key derivation function and the subscriber identification information, which is comprised in the registration request. Thereby, the consumed storage on the mobile network server can be reduced, since for each eUICC the key is generated after receiving the registration request, which comprises the subscriber identification information. It is noted that the key derivation function is then deterministic and the same that has been used by the eUICC to derive the first key.

According to an embodiment, the mobile network server is further configured to block access for the mobile device, if the signed random data is not valid. Thereby the mobile network server may ensure that regular access, i.e. the subscribed services, is only granted to mobile devices that can successfully register, and the mobile network server may increase security, by blocking those devices that fail to successfully register.

According to an embodiment, the mobile network server is further configured to send, after successful authentication of the eUICC, a request to sign first or second random data to the mobile device. This may be in response to a determination that the subscriber identification information was previously used for mobile device registration. The request may also comprise the random data to be signed. Thereby the overall speed of registration can be increased, since only those eUICCs are requested to authenticate, that are determined to use subscriber identification information, like an IMSI, that was already previously used for registration.

According to an embodiment, a computer program product comprises instructions which, when the program is executed by a computer, cause the computer to carry out the method as described above.

### BRIEF DESCRIPTION OF THE DRAWINGS

Figure 1 illustrates a data flow according to an exemplary embodiment of the disclosure.
Figure 2 illustrates another data flow according to an exemplary embodiment of the disclosure.
Figure 3 shows a flow chart illustrating a method for registering a mobile device according to an exemplary embodiment of the disclosure.

### DETAILED DESCRIPTION OF THE DRAWINGS

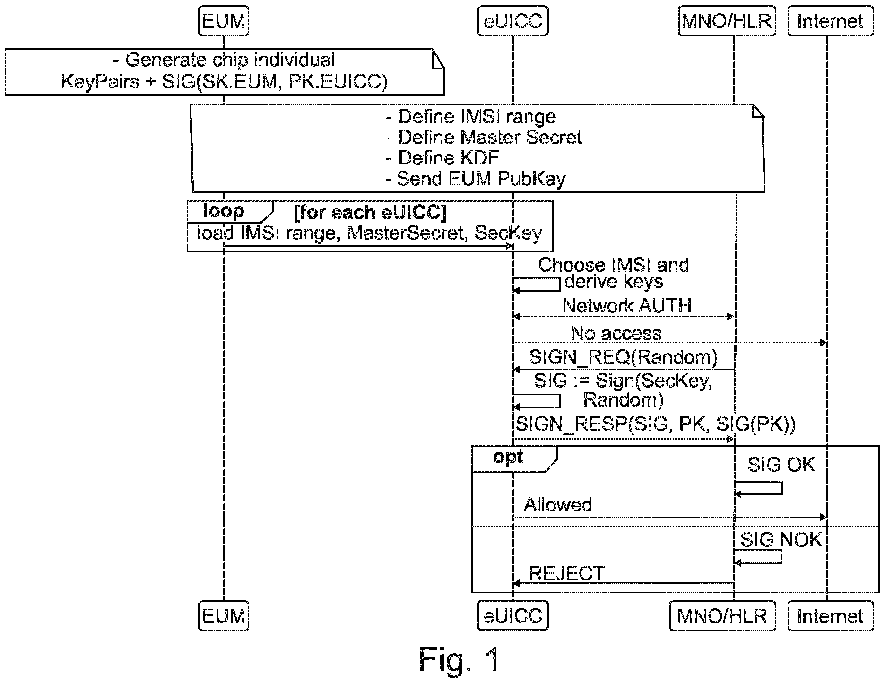

Figure 1 illustrates a data flow according to an exemplary embodiment of the disclosure. The following abbreviations are commonly used in this disclosure:
eUICC refers to an embedded Universal Integrated Circuit Card.
EUM refers to an eUICC manufacturer.
OEM refers to an original equipment manufacturer, which is a device manufacturer.
IMSI refers to an international mobile subscriber identity.
KDF refers to a key derivation function.
MNO refers to a mobile network operator.
HLR refers to a home location register. Is used synonymously with MNO in this disclosure.
SIG refers to a signature. SIG(x) refers in particular to signed data, wherein data x is signed by a secret key.
SK refers to a secret key of an entity, which is generally not made available to other entities. It is commonly used to sign or produce signed data. Sometimes referred to as SecKey.
PK refers to a public key of an entity, which is generally made available to other entities. Sometimes referred to as PubKey. With the public key of an entity, the signature can be tested for validity. AUTH refers to authentication, i.e. the process of proofing the identity or authorization of an entity. SIGN_REQ refers to a request for signing. It is a prompt to provide signed data.
SIGN_RESP refers to the response to the request for singing. It provides signed data.
OK and NOK refers to an acknowledgement or positive determination, OK, or a denial or negative determination, NOK, respectively.

Figure 1 shows exemplary steps that may be used in the disclosed methods. The EUM has stored a second key on the eUICC and generated individual key pairs for each eUICC with related certificates. The eUICC key is signed by the EUM to indicate that the EUM has created them. In particular, the public keys for each eUICC are signed with the secret key of the EUM. The eUICC secret key is also stored on the eUICC.

The EUM generates bootstrap data, which may comprise subscriber identification information like an IMSI. Optionally a plurality of IMSIs can be defined as range or as a list of IMSIs. Alternatively, other information, as described above, may be used. The bootstrap data also may comprise a master key for a key derivation function. In order to enable the MNO to perform the described verification procedures, the EUM shares necessary data with the corresponding MNO in a secure way, if necessary. This may comprise sharing a symmetric key or a public eUICC or EUM key. Further, the MNO is provided with sufficient data to verify the signing done with the second key, which is detailed later.

The EUM stores the corresponding data on each eUICC. This can be done on the eUICCs before delivering them to an OEM for soldering the eUICCs into devices and inside EUM certified factory. Alternatively, the data can be transferred onto the eUICCs when they are already arranged in devices. In any case, the data transfer is commonly effected before the device is delivered to the subscriber, i.e. the end-user. Since this is applicable for more than one eUICC, this can be performed as a loop, as indicated in Figure 1.

On device or eUICC activation, the device performs bootstrap functionality, during which the eUICC determines a subscriber identification information. If a range or a list of IMSIs was defined, the determining means choosing one IMSI from the predefined plurality, e.g. range, of IMSIs. This may be performed randomly or based on a function using certain semi-random values like a current time. In other words, in this example one international mobile subscriber identity, IMSI, from a predefined plurality of international mobile subscriber identities is chosen. Alternatively other subscriber identification information may be used, as described above.

Also, the key derivation function is executed, by which an individual unique first key is generated for the device. The KDF uses the master key, which was stored on the eUICC by the EUM, and the determined subscriber identification information. In other words, eUICC first keys are derived from a master secret key by using a predefined key derivation function and the subscriber identification information. The KDF is deterministic and thus generates the same key for the same input variables. In order to validate the signing with the first key, the KDF is executed a second time with the same input variables, either by the MNO as authentication key producing function or by the EUM. In the latter case, the EUM transmits the key to the MNO in a secure manner.

As examples for the subscriber identification information, it is noted that an IMSI may comprise a static and a dynamic part. The static part may identify a respective network operator (via Mobile Country Codes, MCC, and Mobile Network Codes, MNC) and is identical for all IMSI of that MNO in that country. The dynamic part may be designed in a consecutive fashion and contributes to the uniqueness of an IMSI. The ISMIs available to an eUICC may be a selection from the MNOs pool of numbers but may be a range of numbers or a list of nonconsecutive numbers. An ICCID is also structured, it comprises a major industry identifier, a country code, an issuer identifier number, an individual account identification number, and a checksum part.

Then network authentication is performed on the basis of the server authentication key, which was produced by the mobile network server, and the subscriber identification information and the signed first random data. If the authentication is successful, the device is granted limited connectivity or basic access, which means that the MNO will not grant full connectivity or regular access for the device yet. The device cannot use services like internet access or voice calls but is restricted to communication with the MNO network itself. In other words, the eUICC is authenticated at the mobile network server in order to obtain limited access to the mobile network server.

In other words, the subscriber identification information, which is meant as a unique identifier, is used to derive authentication keys, which are then used to perform network authentication. Therefore, a KDF is stored on the eUICC and by using the subscriber identification information, the first key can be derived from the KDF using the master secret key.

The eUICC may send the registration message to the MNO backend, i.e. MNO server or mobile network server, without inducement, thereby using a push technique. Alternatively, the mobile network server may request the signing of random data from the eUICC. The eUICC would then, in response to this request, sign the random data and return the signed data.

The random data to be signed may either be the first random data again, which may already have been transmitted in the authentication steps, or now, second random data. In other words, random data is signed with a second key. As detailed above, asymmetric or symmetric principles may be applied to the method. Thus, the second key may be an eUICC private key of an eUICC key pair, and the validation key may be an eUICC public key of the eUICC key pair, which is signed with an eUICC manufacturer, EUM, private key. The asymmetric key, i.e. the eUICC public key would then be included in the registration message.

Alternatively, the second key may be the same, and hence symmetric key, as the validation key. For the symmetric procedure to work, the symmetric key needs to be exchanged between the manufacturer, which stores the key on the eUICC and the mobile network operator, MNO, who operates the mobile network server. In a first variant, the EUM generates the key and transmits it to the MNO. The EUM would then store the key on the eUICC, and the MNO would store the key on the mobile network server. In a second variant, the MNO generates the key and stores it on the mobile network server. The symmetric key would then be transmitted to the EUM either by the mobile network server or the MNO, and the EUM stores the key on the eUICC.

In both variants of the symmetric key, it is required that the key is transmitted between the MNO and the EUM in a secure manner, i.e. via a secure communication method. This means, that a different transmission path as for the other communication steps of the method is used. The key can be transmitted via other electronic means, but in particular offline, as detailed above.

The mobile network server of the mobile network operator, which is sometimes used synonymously, may then determine the validity of the signed random data, and thereby determine whether the eUICC is requesting registration rightfully or not.

If the signature is valid, OK, the MNO grants full connectivity to the device/eUICC. The device is allowed on the mobile network servers. In other words, regular access is granted to the mobile network server for the mobile device upon determining, by the mobile network server, that the signed random data of the eUICC is valid.

If the eUICC could not prove its validity, i.e. if the signature is not valid, NOK, the device/eUICC is blocked from the network. The device is rejected from the mobile network servers. In other words, access to the mobile network server is blocked for the mobile device upon determining, by the mobile network server, that the signed random data of the eUICC is not valid.

The determination of validity of the signed random data may at least be based on the validation key. It is noted that the nature of the validation key may depend on the cryptographic techniques used, as detailed above. If asymmetric keys are used, the validation key is the eUICC public key of the eUICC key pair, which is signed with an eUICC manufacturer, EUM, private key. The public key is then part of the registration message, so that it can be checked by the MNO.

If a symmetric key is used, the validation key is the key that the EUM and the MNO exchanged as discussed above.

It is noted that the communication between the MNO and the eUICC can be effected in different variants. An exemplary variant is that the MNO pushes a request to the eUICC. The request to sign may be pushed from the mobile network server to the eUICC by an over-the-air server, a short message service, SMS, message, a hypertext transfer protocol push session, or a Signaling System No. 7 message. Other transportation ways are possible, and a request can be pushed via more than one way at the same time.

Another exemplary variant is that the eUICC proactively pushes the required data to the MNO. The registration message may be sent by an over-the-air server, a toolkit framework, a short message service, SMS, message, as Unstructured Supplementary Service Data, USSD, a hypertext transfer protocol pull session, or a Signaling System No. 7 message. Other transportation ways are possible, and the registration message may be pushed via more than one way at the same time. As stated before, instead of incoming random data to sign - i.e. comprised in a request to sign - the eUICC can use random data from previous communication, e.g. the basic authentication request, to be included in the signature or the signed random data.

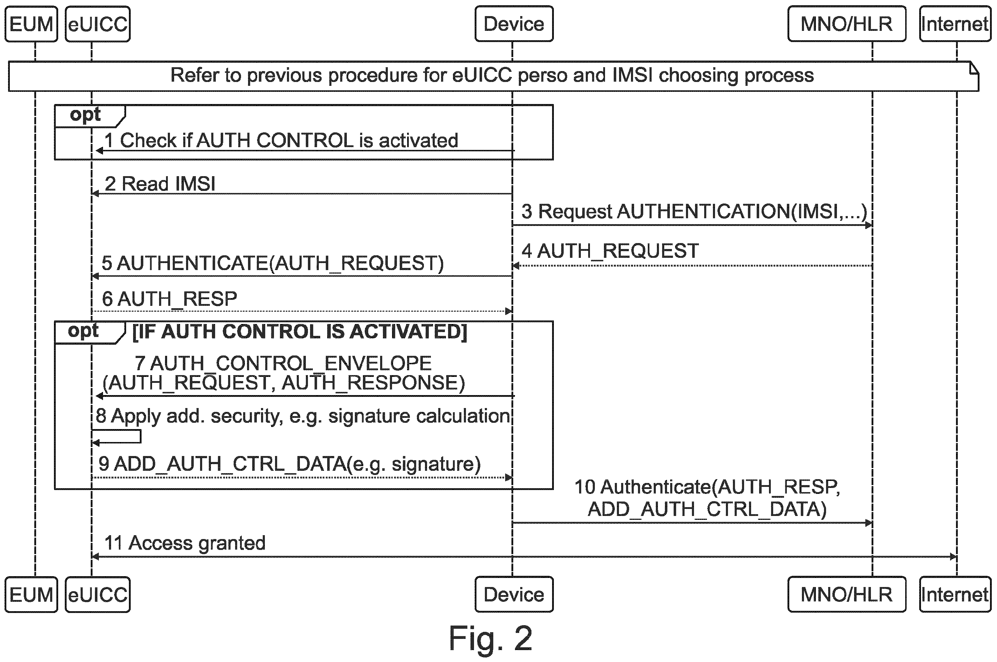

Figure 2 illustrates another data flow according to an exemplary embodiment of the disclosure, and in particular of requesting authentication from eUICC. For this embodiment, a setting on an eUICC may instruct the device to perform an additional request to eUICC for authentication. This additional request is based on a newly defined terminal capability of the device, which may be named "Authentication Control". The device may issue a toolkit envelope containing the authentication request. The toolkit envelope may also contain the response data. The eUICC may then perform additional security operations, for example creating a signature over given data and returning it to the server. The device then sends back all eUICC response data to the HLR or MNO, respectively.

As can be seen in Figure 2, the eUICC preparation and preliminary data exchange corresponds to the data flow depicted in Figure 1. This refers in particular to the eUICC personalization, i.e. the generation of the individual key pairs and storing them on the eUICC, as well as the choosing of an IMSI by the eUICC from a predetermined plurality of IMSIs.

Optionally, as indicated in Figure 2, the device may first check if a particular, additional authentication flow is required. This particular, additional authentication is also called authentication control. Authentication control can also be viewed as a feature of the eUICC and the device which can be activated or deactivated. This check can for example be performed during activation or boot procedure of the device.

The device may read the chosen IMSI from the eUICC and start the network authentication procedure by transmitting an authentication request comprising the IMSI to the MNO. Alternative subscriber identification information may be used instead.

The MNO/HLR may then return authentication request data to the device, which is passed on the eUICC. The eUICC processes the authentication request and transmits an authentication response to the device.

If the requirement for authorization control is confirmed, i.e. authentication control is determined to be activated, the device may issue a second request to eUICC, containing data from the authentication described in context with Figure 1 before. The data may be from the authentication request or the authentication response.

The eUICC may then apply additional security operations, e.g. signing the data and returning the signature together with a public key identifier or certificate to the device. The device may then transmit this authentication comprising the authentication response from the eUICC to the MNO, which may then not only check the standard authentication response but also, if available, the additional authentication control data.

Based on the validity of the received eUICC data, the MNO/HLR would then grant or block access for the device and the eUICC.

In other words, this disclosure provides a two-level authentication, i.e. the proof that the device is really the device it claims to be (i.e. the correct and legal IMSI on a correct and legal eUICC). The authentication is split into two steps or in other words relies on two cryptographical tokens. Only if both tokens are valid, then full-service access is authorized to the respective device, i.e. IMSI or eUICC. In that sense, authorization is also applicable in two steps, wherein each thereof follows a respective step of authentication.

To summarize, there is a first step of authenticating of a unique identifier (like IMSI, ICCID, IMPI, RUIMID, etc.) via the key derivation function, KDF. If successful, limited authorization is granted, i.e. access to the internal MNO network only. There is also a second step of authenticating of the unique identifier via the described signature process. If successful, full authorization for full access, including e.g. internet access, is granted.

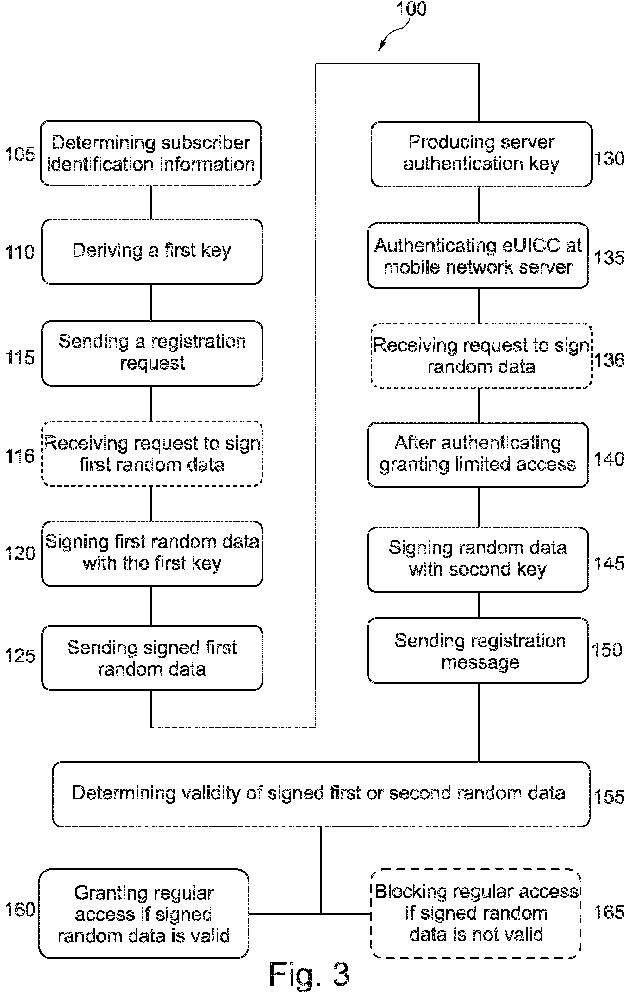

Figure 3 shows a flow chart illustrating a method 100 for registering a mobile device according to an exemplary embodiment of the disclosure.

Method 100 can be employed for registering a mobile device comprising an embedded Universal Integrated Circuit Card, eUICC, at a mobile network server.

Method 100 starts with determining 105, by the eUICC, a subscriber identification information. As discussed, the subscriber identification information can be an IMSI, ICCID, IMPI, EUIMID, RUIMID, etc. The subscriber identification information may be determined by the eUICC from a predefined list or range.

Method 100 then proceeds with deriving 110, by the eUICC, a first key from a master secret key by using a key derivation function and the subscriber identification information. The key derivation function, KDF, and the master secret key are stored on the eUICC. With the KDF, the device can generate authentication keys to authenticate at a mobile network operator.

Method 100 then proceeds with sending 115, by the eUICC, a registration request to the mobile network server, wherein the registration request comprises the subscriber identification information.

In response to the sending 115 of the registration request the mobile network server may send a request to sign first random data. This request may thus be received in step 116 by the eUICC from the mobile network server. This request to sign may comprise the first random data that is to be signed by the eUICC. An alternative to receiving the first random data via the request to sign in step 116, may be that the first random data is predefined and stored on the eUICC.

Method 100 then proceeds with signing 120, by the eUICC, of the first random data with the first key, which was derived in step 110, and sending 125, by the eUICC upon instigation by the mobile device, the signed first random data to the mobile network server.

In other words, in the network registration procedure, the network authentication is triggered by the mobile device, or to be more precise the data transmission unit of a mobile device, i.e. a modem. The eSIM or SIM does not initiate the transmission but is a part of the transmission path as the origin. So, the registration request is sent by eUICC, but it is triggered, initiated or instigated by the mobile device, which is also a part of the transmission path. The eUICC transmits the signed first random data to the mobile device which transmits it to the mobile network server.

The mobile network server produces in step 130 a server authentication key with an authentication key producing function. The server authentication key may be produced on the basis of the subscriber identification information that was transmitted in step 115. The producing of the server authentication key in step 130 can be performed at any stage after receiving the registration request in step 115. Figure 3 shows one option for the temporal placement of producing the server authentication key in step 130.

Method 100 then proceeds with authenticating 135 the eUICC at the mobile network server on the basis of the subscriber identification information, the signed first random data, and the server authentication key. If the authentication in step 135 is successful, the mobile network grants the eUICC limited access to the mobile network server in step 140. As described above, limited access or basic connectivity allows a device only to communicate with the MNO, but not to use services beyond the server, like voice calls, internet access, etc.

After the successful authentication of step 135, the mobile network server may send a request to sign first or second random data. This request may thus be received in step 136 by the eUICC from the mobile network server. This request to sign may comprise the first random data, possibly again, provide new, second random data, or provide an indication of which data to use, without sending the actual data that is to be signed by the eUICC. The second random data, like the first random data, can also be predefined and stored on the eUICC.

Method 100 then proceeds with signing 145 random data with a second key and sending 150 the signed random data in a registration message to the mobile network server. The second key is stored on the eUICC. The random data signed in step 145 may be the first random data, again, or new, second random data.

While the sending 150 of the registration message from the eUICC to the mobile network server may be implemented in several variants, in all variants, which can use different transmission paths, the registration message is transferred via mobile device, which provides the transmission capability.

In some variants, the mobile device does not trigger the data exchange but merely transparently forwards the data from the eUICC to the mobile network server. In some variants, the mobile device supports "authentication control" capability, as described with Figure 2 above. In this case, the eUICC triggers the transmission of the registration message.

However, for all variants, the mobile device acts as a transparent carrier, thus the eUICC sends the registration message.

Method 100 then proceeds to determining 155, by the mobile network server, whether the signed first or second random data comprised in the registration message is valid. The determination of validity is performed on the basis of the validation key. As stated above, the validation key is the eUICC public pair that was included in the registration message if asymmetric keys are used, and if a symmetric key is used, the validation key was previously exchanged between the MNO and the EUM.

Upon determining in step 155 that the signed first or second random data comprised in the registration message is valid, the method 100 proceeds with granting 160, by the mobile network server, regular access to the eUICC.

Optionally, upon determining in step 155 that the signed first or second random data comprised in the registration message is not valid, the method 100 may proceed with blocking 165, by the mobile network server, regular access to the eUICC.

### Reference signs

- 100: Method for registering a mobile device comprising an eUICC
- 105: Determining subscriber identification information
- 110: Deriving first key
- 115: Sending registration request
- 116: Receive request to sign random data
- 120: Signing first random data with the first key
- 125: Sending signed first random data
- 130: Producing server authentication key
- 135: Authenticating eUICC
- 136: Receive request to sign random data
- 140: Granting limited access
- 145: Signing first or second random data with second key
- 150: Sending registration message
- 155: Determining validity of signed first or second random data
- 160: Granting regular access
- 165: Blocking access

## Claims

1. A method (100) for registering a mobile device comprising an embedded Universal Integrated Circuit Card, eUICC, at a mobile network server, the method (100) comprising:
determining (105), by the eUICC, a subscriber identification information;
deriving (110), by the eUICC, a first key from a master secret key by using a key derivation function and the subscriber identification information;
sending (115), by the eUICC, a registration request to the mobile network server, wherein the registration request comprises the subscriber identification information;
signing (120), by the eUICC, first random data with the first key;
sending (125), by the eUICC upon instigation by the mobile device, the signed first random data to the mobile network server;
producing (130), by the mobile network server, a server authentication key with an authentication key producing function;
authenticating (135), by the mobile network server, the eUICC on the basis of the subscriber identification information, the signed first random data, and the server authentication key;
upon successful authenticating (135), granting (140), by the mobile network server, limited access to the eUICC;
signing (145), by the eUICC, the first random data or second random data with a second key, that is stored on the eUICC;
sending (150), by the eUICC, a registration message comprising the signed first or second random data to the mobile network server;
determining (155), by the mobile network server, whether the signed first or second random data comprised in the registration message is valid at least on the basis of a validation key; and
upon determining (155) that the signed first or second random data comprised in the registration message is valid, granting (160), by the mobile network server, regular access to the eUICC.

2. The method (100) of claim 1,
wherein the second key is an eUICC private key of an eUICC key pair;
wherein the validation key is an eUICC public key of the eUICC key pair;
wherein the eUICC public key is signed with an eUICC manufacturer, EUM, private key; and
wherein the registration message also comprises the eUICC public key.

3. The method (100) of claim 1,
wherein the second key is the validation key, which is a symmetric key, which an eUICC manufacturer, EUM, received from a mobile network operator, MNO, or the mobile network operator, MNO, received from the eUICC manufacturer, EUM, via a secure communication method, wherein the mobile network operator operates the mobile network server.

4. The method (100) of any one of claims 1 to 3, further comprising
upon determining (155) that the signed first or second random data comprised in the registration message is not valid, blocking (165), by the mobile network server, access to the mobile network server for the eUICC.

5. The method (100) of any one of claims 1 to 4, further comprising at least one of
receiving (116), in response to the sending (115) of the registration request, by the eUICC from the mobile network server, a request to sign first random data;
receiving (136), after successful authenticating (135) at the mobile network server, by the eUICC from the mobile network server, a request to sign first or second random data.

6. The method (100) of any one of claims 1 to 5,
wherein communication between the eUICC and the mobile network server is performed via at least one of:
- an over-the-air server;
- a toolkit framework;
- a short message service, SMS, message;
- as Unstructured Supplementary Service Data, USSD;
- a hypertext transfer protocol pull session;
- a Signaling System No. 7 message.

7. An embedded Universal Integrated Circuit Card, eUICC, at least having stored thereon:
an id function for determining a subscriber identification information;
a master secret key;
a second key; and
a key derivation function;
wherein, upon activation, the eUICC is configured to:
determine the subscriber identification information by executing the id function;
derive a first key from the master secret key by using the key derivation function and the subscriber identification information;
sign first random data with the first key;
send the signed first random data to the mobile network server upon instigation by the mobile device;
sign the first random data or second random data with the second key; and
send a registration message comprising the signed first or second random data to the mobile network server.

8. The eUICC of claim 7,
wherein the second key is an eUICC private key of an eUICC key pair, and wherein the registration message also comprises the eUICC public key of the eUICC key pair, wherein the eUICC public key is signed with an eUICC manufacturer, EUM, private key; or
wherein the second key is a symmetric key, which an eUICC manufacturer, EUM, received from a mobile network operator, MNO, or the mobile network operator, MNO, received from the eUICC manufacturer, EUM, via a secure communication method, wherein the mobile network operator operates the mobile network server.

9. The eUICC of any one of claims 7 to 8, further configured to receive a request to sign first or second random data from the mobile network server.

10. A mobile network server, at least having stored thereon:
a plurality of subscriber identification information; and
an authentication key producing function;
wherein the mobile network server is configured to:
receive a registration request to register an eUICC of a mobile device, wherein the request comprises subscriber identification information;
receive, from the eUICC, signed first random data;
produce a server authentication key with the authentication key producing function;
authenticate the eUICC on the basis of the subscriber identification information, the signed first random data, and the server authentication key;
grant, upon successful authentication, limited access to the eUICC;
receive a registration message comprising the signed first random data or signed second random data from the eUICC;
determine whether the signed first or second random data comprised in the registration message is valid at least on the basis of a validation key; and
grant, upon determination that the signed first or second random data comprised in the registration message is valid, regular access to the eUICC.

11. The mobile network server of claim 10,
wherein the registration message also comprises the validation key, which is an eUICC public key of an eUICC key pair, wherein the eUICC public key is signed with an eUICC manufacturer, EUM, private key; or
wherein the validation key is a symmetric key, which an eUICC manufacturer, EUM, received from a mobile network operator, MNO, or the mobile network operator, MNO, received from the eUICC manufacturer, EUM, via a secure communication method, wherein the mobile network operator operates the mobile network server.

12. The mobile network server of claim 10 or 11,
wherein the mobile network server further has stored thereon a list of keys, wherein each key of the list of keys is associated with one of the plurality of subscriber identification information, and wherein the authentication key producing function retrieves the sever authentication key that is associated with the subscriber identification information, which is comprised in the registration request; or
wherein the mobile network server further has stored thereon a master secret key and a key derivation function, and wherein the authentication key producing function derives the server authentication key from the master secret key by using the key derivation function and the subscriber identification information, which is comprised in the registration request.

13. The mobile network server of any one of claims 10 to 12, further configured to block access for the mobile device, if the signed first or second random data is not valid.

14. The mobile network server of any one of claims 10 to 13, further configured to send a request to sign first or second random data.

15. A computer program product comprising instructions which, when the program is executed by a computer, cause the computer to carry out the method (100) of any one of claims 1 to 6.
